# EUROPÄISCHE PATENTSCHRIFT

(11) **EP 2 616 304 B1**
(45) Veröffentlichungstag und Bekanntmachung des Hinweises auf die Patenterteilung: **10.05.2017**
(21) Anmeldenummer: 11746487.5
(22) Anmeldetag: 18.08.2011
(51) Int. Cl.: B61G 5/10

(54) **ELEKTROKUPPLUNG FÜR EISENBAHNEN**
ELECTRIC COUPLING FOR RAILWAYS
ACCOUPLEMENT ÉLECTRIQUE POUR CHEMINS DE FER

(30) Priorität: 17.09.2010 DE 102010045742
(43) Veröffentlichungstag der Anmeldung: 24.07.2013
(73) Patentinhaber: Harting Electric GmbH & Co. KG, 32339 Espelkamp (DE)
(72) Erfinder: KRAUSE, Jens, 92318 Neumarkt i.d. Oberpfalz (DE); HEHLGANS, Jörg, 31199 Diekholzen (DE)
(74) Vertreter: Prinz & Partner mbB
(86) Internationale Anmeldenummer: PCT/EP2011/004165
(87) Internationale Veröffentlichungsnummer: WO 2012/034630

(56) Entgegenhaltungen:
- EP-A1- 1 762 455
- WO-A1-03/028299
- WO-A1-2005/113313
- WO-A1-2006/013638
- WO-A2-2007/079501
- DE-A1-102004 037 849
- DE-A1-102007 053 497
- US-A- 5 435 505

## Beschreibung

Die Erfindung betrifft eine Elektrokupplung für Eisenbahnen, mit einem ersten und einem zweiten Kupplungsteil, die jeweils einen Träger aufweisen, in dem mehrere Koppelteile angeordnet sind, mit denen eine elektrische, pneumatische und/oder hydraulische Kopplung von einem Kupplungsteil zum anderen Kupplungsteil hergestellt werden kann, wobei mindestens eine Hochfrequenzkopplung vorgesehen ist, die durch eine gekapselte Antenne in dem einen Kupplungsteil und eine gekapselte Antenne in dem anderen Kupplungsteil gebildet ist, und wobei die Hochfrequenzkopplung zwei miteinander zusammenwirkende Hochfrequenz-Kopplungsteile aufweist, die jeweils als Kunststoffkörper ausgeführt sind, der die Antenne vollständig umschließt.

Eine solche Elektrokupplung ist bei modernen Zügen neben der mechanischen Kupplung angeordnet, welche die Wagen eines Zuges oder die Triebwagen von Zugteilen miteinander verbindet. Über die Elektrokupplung werden dann elektrische, pneumatische und/oder hydraulische Verbindungen zwischen den Wagen eines Zuges oder von einem Triebwagen zum nächsten Triebwagen hergestellt.

In jüngster Zeit besteht vermehrt der Bedarf, eine hochfrequente Datenübertragung von Wagen zu Wagen bzw. von Triebwagen zu Triebwagen zu ermöglichen. Zum einen können auf diese Weise Steuerbefehle von einem Triebwagen zum nächsten übertragen werden. Zum anderen können mit einer solchen Datenübertragung auch Multimediainhalte übertragen werden, die den Fahrgästen angeboten werden können.

Grundsätzlich bekannt ist, dass die hochfrequente Datenübertragung durch Stecker realisiert werden kann, wie sie beispielsweise von Ethernet-Kabeln bekannt sind. Solche Steckverbinder sind jedoch für den Einsatz bei Eisenbahnen nicht geeignet, da sie durch die unvermeidbaren Verschmutzungen bei einer Verbindung von einem Wagen zum anderen sehr schnell funktionsunfähig würden. Daher sind im Stand der Technik verschiedene Vorschläge bekannt, die hochfrequente Datenübertragung mittels einer Funkverbindung von einem Wagen zum nächsten bzw. vom Triebwagen eines Zugteils zum Triebwagen eines zweiten Zugteils herzustellen. Nachteilig hierbei ist, dass von Wagen zu Wagen und noch mehr von einem Triebwagen zum nächsten vergleichsweise große Distanzen überwunden werden müssen, die zu Problemen hinsichtlich der Abhörsicherheit sowie der Störbarkeit von außen führen. Bei der Datenübertragung von einem Triebwagen zum nächsten stellt sich außerdem das Problem, dass die für die Datenübertragung notwendige Antenne in der Fahrzeugstruktur angebracht werden muss, was zu Problemen hinsichtlich der Strukturfestigkeit sowie der elektrischen Anbindung der Antenne führt.

Die EP 1 762 455 A1 zeigt eine Elektrokupplung für Schienenfahrzeuge mit einer Signalübertragungsvorrichtung, bei der eine Hochfrequenzfunkverbindung zur Datenübertragung eingesetzt wird. Dazu ist eine Monopolantenne in einem metallischen Rohr im Kupplungskopf des Schienenfahrzeugs derart angeordnet, dass sich die Antennen zweier aneinandergekoppelter Kupplungselemente gegenüberliegen und sehr nahe kommen, doch durch einen Luftspalt getrennt sind. Die Antennen sind zur Vermeidung von Beschädigungen sowie zum Schutz gegen Stöße berührungslos gegenüber voneinander positioniert und hermetisch dicht verschlossen.
Die US 5 435 505 A offenbart ebenfalls eine Hochfrequenzkopplung für Elektrokupplungen für Eisenbahnen, die jedoch keinen Träger aufweist, in dem mehrere Koppelteile angeordnet sind. Die Hochfrequenzkopplung selbst besteht dabei aus einer Antenne, die in einem Gehäuse angeordnet ist. Das Gehäuse besteht aus einem Kunststoff und ist an seiner Stirnseite mit einem Fenster versehen.

Ebenso zeigt die DE 2004 037849 A1 eine Elektrokupplung für Eisenbahnen mit Hochfrequenzkopplungen. Die Hochfrequenzkomponenten sind in der Zugkopplung angeordnet, die auch keine weiteren Koppelteile aufweist. Die Hochfrequenzkomponenten enden an den Stirnseiten der Zugkupplungen und sind als rechteckige metallische Baugruppenträger ausgebildet. Die Antenne ist als Patchantenne ausgeführt und durch ein Mikrowellenfenster vor Umwelteinflüssen geschützt. Im gekoppelten Zustand liegen sich die Antennenflächen parallel gegenüber.

Die Aufgabe der Erfindung besteht somit darin, eine Möglichkeit für eine hochfrequente Datenübertragung zwischen den Wagen eines Zuges oder den Triebwägen verschiedener Zugteile zu schaffen, die praxistauglich ist.

Zur Lösung dieser Aufgabe ist erfindungsgemäß bei einer Elektrokupplung der eingangs genannten Art eine Hochfrequenzkopplung gemäß dem kennzeichnenden Teil des Anspruches 1 vorgesehen. Die Erfindung beruht auf dem Grundgedanken, für die hochfrequente Datenübertragung eine Hochfrequenzkopplung dort vorzusehen, wo auch die anderen Verbindungen von Wagen zu Wagen bzw. von Triebwagen zu Triebwagen hergestellt werden, nämlich in der Elektrokupplung. Somit müssen keine Öffnungen in der Fahrzeugstruktur für separate Antennen, etc. vorgesehen werden, und es muss auch keine separate Antenne verkabelt werden. Die hochfrequente Datenübertragung erfolgt dabei ohne eine galvanische Kopplung. Dies ist besonders vorteilhaft im Hinblick auf die im Bereich der Elektrokupplung unvermeidbaren Verschmutzungen und Feuchtigkeitseinwirkungen. Eine kurze Funkstrecke, wie sie zwischen den beiden Antennen gebildet ist und die in der Größenordnung von Millimetern oder weniger Zentimeter liegt, ist praktisch immun gegen Schmutz oder Feuchtigkeit. Außerdem erlaubt es die kurze Funkstrecke, durch geeignetes Einstellen von Empfindlichkeit und Sendeleistung die Abhörsicherheit zu gewährleisten. Der Verzicht auf eine galvanische Kopplung beseitigt auch das Risiko, dass über die Schirmung der hochfrequenten Datenübertragung hohe Ausgleichsströme fließen, die zu einer Beschädigung oder gar einer Zerstörung der Datenübertragungsstrecke führen könnten.

Vorzugsweise ist vorgesehen, dass die Antennen jeweils Magnetantennen sind. Der Begriff "Magnetantenne" bezeichnet hier eine Antenne, bei der die Datenübertragung im Wesentlichen, also überwiegend, durch das gesendete bzw. empfangene Magnetfeld erfolgt und weniger durch ein gesendetes bzw. empfangenes elektrisches Feld. Solche Magnetantennen sind vorzugsweise als Flachantennen ausgeführt, was hinsichtlich des Platzbedarfs vorteilhaft ist, und sie sind insbesondere als Antennenschleife oder "Loop-Antenne" ausgeführt. Eine Magnetantenne bietet den Vorteil, dass die Magnetfelder schneller abklingen als vergleichbare elektrische Felder von zum Beispiel Patch- oder Dipol-Antennen. Außerdem sind die für die Datenübertragung verwendeten Magnetfelder weitgehend unempfindlich gegen Feuchtigkeit, Schnee und Eis, was sich sehr vorteilhaft auf die Übertragungssicherheit im Bahneinsatz auswirkt.

Gemäß einer Ausführungsform der Erfindung wird die Hochfrequenzkopplung auf mechanischer Ebene durch die beiden ineinander eingreifenden Hochfrequenz-Kopplungsteile bewirkt, wodurch die beiden Antennen in eine Position relativ zueinander gebracht werden, in der die hochfrequente Datenübertragung erfolgt. Der Vorteil dieser Ausgestaltung besteht darin, dass sich die Antennen, wenn die beiden Hochfrequenz-Kopplungsteile ineinander eingreifen, sich in einer definierten Lage relativ zueinander befinden. Ferner ergibt sich eine sehr robuste Konstruktion und sorgt für eine Gleichartigkeit bei der Montierbarkeit.

Dabei kann die Aufnahme als Buchse ausgeführt sein und der Vorsprung als Stift, der bei geschlossener Elektrokupplung so in die Buchse eingeschoben ist, dass die beiden Antennen mindestens näherungsweise in einer Ebene liegen. Dies gewährleistet eine Selbstzentrierung und eine präzise Lage der Antennen zueinander. Alternativ kann vorgesehen sein, dass die Aufnahme eine kegelförmige Aussparung aufweist und der Vorsprung als Kegel ausgeführt ist. Auf diese Weise ergibt sich die Selbstzentrierung auch bei größeren Lageabweichungen von der Sollposition.

Gemäß einer alternativen Ausführungsform ist vorgesehen, dass die beiden Hochfrequenz-Kopplungsteile einer Hochfrequenzkopplung als stumpfer Vorsprung ausgeführt sind, die bei geschlossener Elektrokupplung einander unmittelbar gegenüberliegen, sodass die beiden Antennen einander mit geringem Abstand gegenüberliegen. Diese Ausgestaltung lässt größere Toleranzen quer zur Steckrichtung zu.

Die Erfindung wird nachfolgend anhand verschiedener Ausführungsformen beschrieben, die in den beigefügten Zeichnungen dargestellt sind. In diesen zeigen:
- Figur 1 schematisch zwei Triebwagen mit dazwischen angeordneter Kupplung;
- Figur 2 in einer schematischen Draufsicht eine Eisenbahnkupplung, bei der zwei Elektrokupplungen vorgesehen sind;
- Figur 3 schematisch zwei Hochfrequenz-Kopplungsteile, die eine Hochfrequenzkopplung bei der in Figur 2 gezeigten Elektrokupplung bilden können;
- Figur 4 in einer perspektivischen Ansicht die bei der Hochfrequenzkopplung von Figur 3 verwendeten Antennen;
- Figur 5 in einer schematischen Ansicht die Hochfrequenzkopplung von Figur 3 im gesteckten Zustand;
- Figur 6 die Lage der Antennen der Hochfrequenzkopplung von Figur 3 im gesteckten Zustand;
- Figur 7 schematisch eine Elektrokupplung mit den beiden Hochfrequenz-Kopplungsteilen gemäß der ersten Ausführungsform in einer Explosionsansicht;
- Figur 8 die Elektrokupplung von Figur 7 mit darin montierten Hochfrequenz-Kopplungsteilen;
- Figur 9 in einer perspektivischen, schematischen Ansicht eine Hochfrequenzkopplung gemäß einer zweiten Ausführungsform;
- Figur 10 in einer schematischen Ansicht die Hochfrequenzkopplung gemäß der zweiten Ausführungsform im gekoppelten Zustand;
- Figur 11 in einer perspektivischen Ansicht die Antennen von Figur 9;
- Figur 12 in einer schematischen Explosionsansicht eine Elektrokupplung mit zwei Hochfrequenz-Kopplungsteilen gemäß der zweiten Ausführungsform;
- Figur 13 in einer perspektivischen, schematischen Ansicht die Elektrokupplung von Figur 12 mit den darin montierten Hochfrequenz-Kopplungsteilen;
- Figur 14 eine alternative Ausgestaltung einer Elektrokupplung mit einer Hochfrequenzkopplung gemäß der zweiten Ausführungsform; und
- Figur 15 in einer schematischen Darstellung eine Hochfrequenzkopplung gemäß einer dritten Ausführungsform.

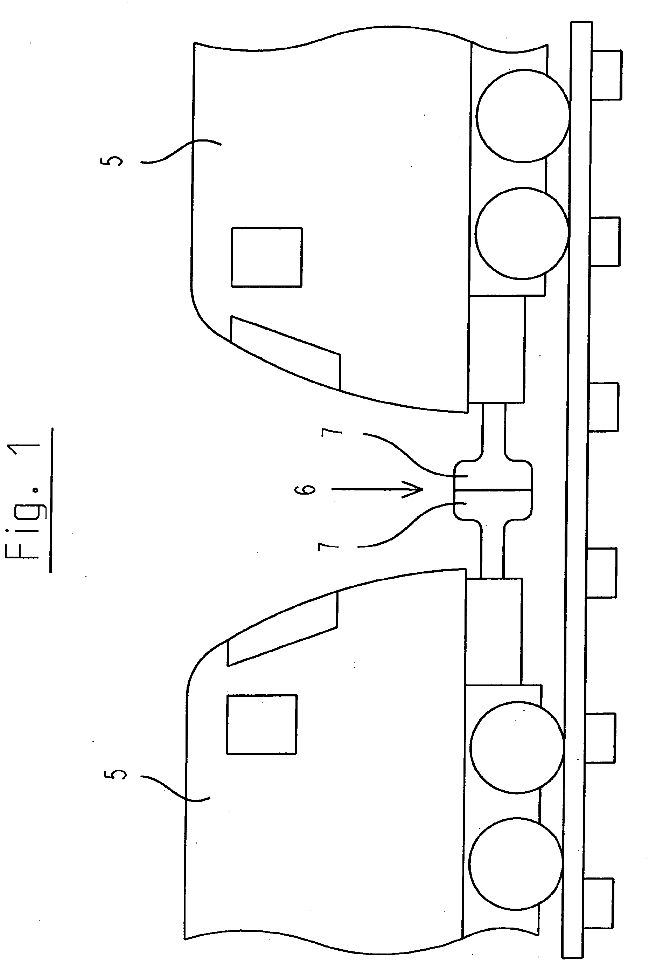

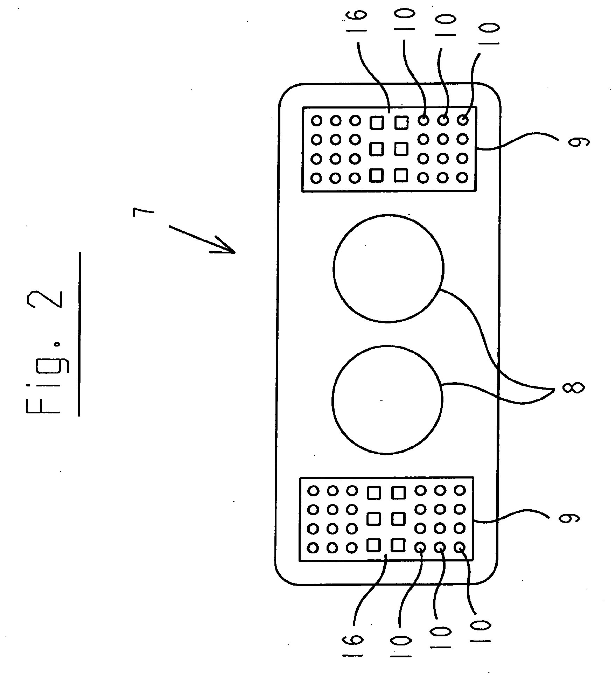

In Figur 1 ist schematisch ein Zug dargestellt, der aus zwei miteinander verbundenen Zugabschnitten besteht, die jeweils einen Triebwagen 5 enthalten. Die beiden Triebwagen sind miteinander durch eine Kupplung 6 miteinander verbunden, die zwei Kupplungsteile 7 umfasst. Jedes Kupplungsteil 7 (siehe Figur 2) enthält eine mechanische Kupplung 8, die üblicherweise als Scharfenbergkupplung ausgeführt ist, sowie eine Elektrokupplung 9. Sowohl die mechanische Kupplung 8 als auch die Elektrokupplung 9 sind bei modernen Zügen automatisiert betätigbar, um beim Koppeln von Triebwagen mehrerer Zugteile oder auch von Wagen eines Zugteils untereinander sowohl die nötige mechanische Verbindung herzustellen als auch die zur Steuerung nötigen elektrischen, hydraulischen und/oder pneumatischen Verbindungen herzustellen. Zu diesem Zweck sind in die Elektrokupplung 9 üblicherweise mehrere Stecker integriert, die beim Verbinden der beiden Kupplungsteile der Elektrokupplung 9 die jeweilige Verbindung herstellen.

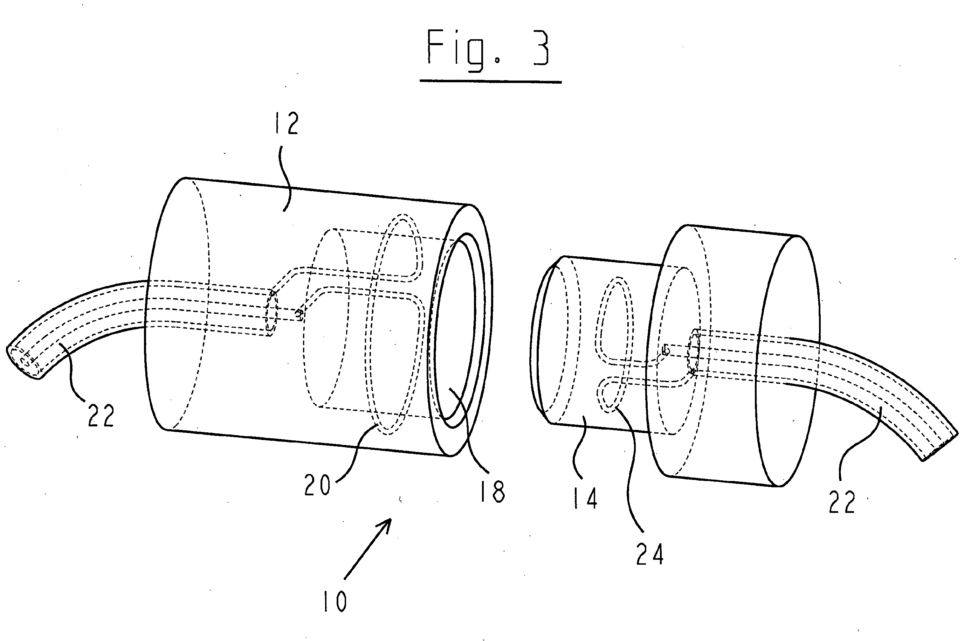

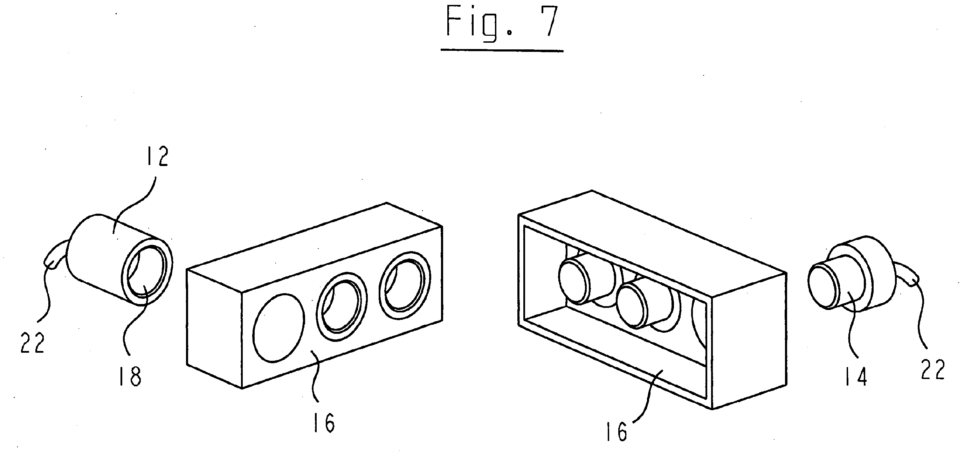

Erfindungsgemäß ist vorgesehen, dass in die Elektrokupplung mindestens eine Hochfrequenzkopplung 10 integriert ist. Dies ermöglicht, beim Schließen der Kupplung 6 zusätzlich zu den üblichen, bekannten Verbindungen zwischen den beiden Kupplungsteilen 7 auch eine hochfrequente Datenübertragung durch die Kupplung 6 herzustellen. Die Hochfrequenzkopplung erfolgt dabei durch Hochfrequenz-Kopplungsteile 12, 14 (siehe Figur 3), die in einem Träger 16 (siehe auch Figur 7) eines Kupplungsteils der Elektrokupplung 9 angeordnet sind.

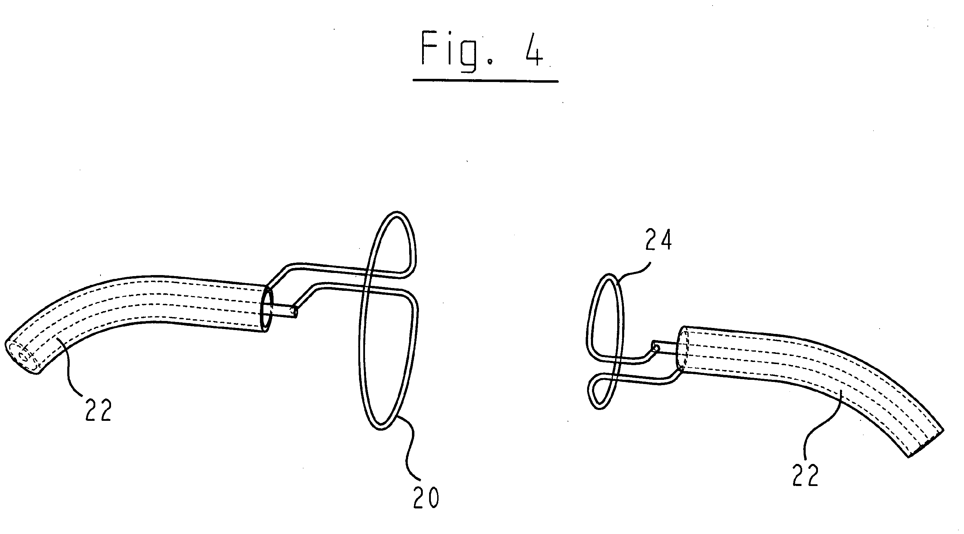

Bei der in den Figuren 3 bis 8 gezeigten Ausführungsform ist das Hochfrequenz-Kopplungsteil 12 als konkave Aufnahme ausgeführt, hier konkret als zylindrische Buchse mit einer Innenöffnung 18. Gekapselt im Material der Buchse 12 ist eine Magnetantenne 20 angeordnet, die hier als eine Schleife ausgeführt ist, welche die Öffnung 18 konzentrisch umgibt. Angeschlossen ist die Antenne 20 durch ein Koaxialkabel 22.

Das zweite Hochfrequenz-Kopplungsteil 14 ist bei der ersten Ausführungsform als Vorsprung ausgebildet, hier konkret als zylindrischer Stift, der in die Aufnahme des anderen Hochfrequenz-Kopplungsteils 12 eingeschoben werden kann, also in die Öffnung 18. Im Inneren des Stifts 14 Ist eine Magnetantenne 24 aufgenommen, die ebenfalls an ein Koaxialkabel 22 angeschlossen. Auch die Antenne 24 ist durch eine Antennenschleife gebildet und in gleicher Weise wie die Antenne 20 eine Flachantenne. Sowohl am Stift 14 als auch am Rand der Öffnung 18 sind jeweils Einführschrägen vorgesehen, um das Einschieben des Stifts in die Öffnung zu erleichtern.

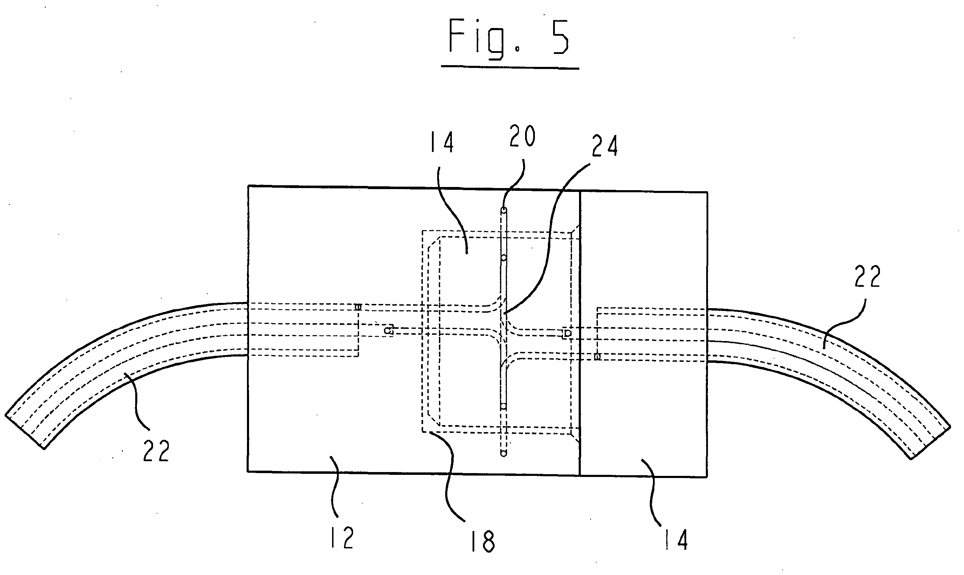

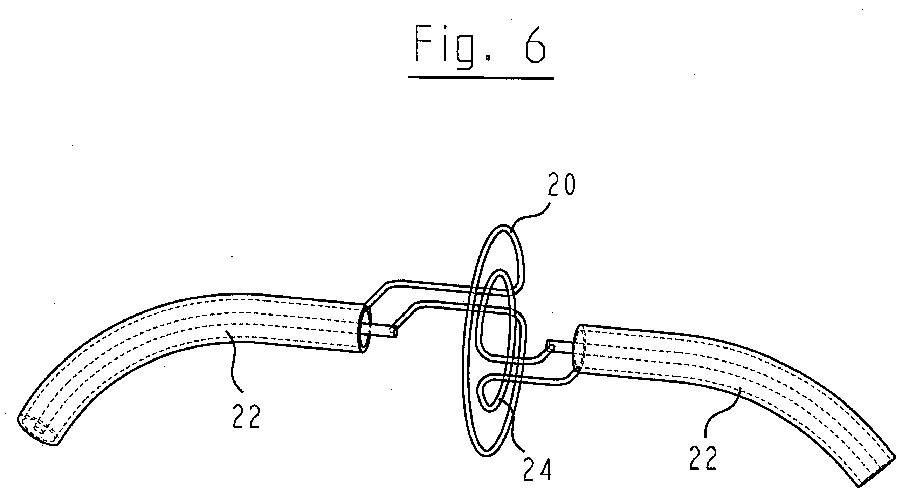

Wie in Figur 5 zu sehen ist, liegt im gesteckten Zustand der beiden Hochfrequenz-Kopplungsteile 12, 14 die Antenne 24, die im Stift 14 angeordnet ist, in derselben Ebene wie die Antenne 20 und innerhalb von dieser. Auf diese Weise ist eine hervorragende magnetische Kopplung mit einer Funkstrecke im Bereich von Millimetern bzw. wenigen Zentimetern geschaffen (siehe auch Figur 6). In Abhängigkeit von der Geometrie der Antennen und den Abständen kann auf diese Weise auch eine überwiegend induktive Kopplung zwischen den beiden Antennen gebildet werden.

Die Hochfrequenz-Kopplungsteile 12, 14 bestehen aus einem geeigneten Kunststoff, der hinsichtlich seiner dielektrischen Eigenschaften für die hochfrequente Signalübertragung geeignet ist. Vorzugsweise werden die Hochfrequenz-Kopplungsteile spritzgegossen, sodass die Antenne 20 bzw. 24 vollständig im Material der Hochfrequenz-Kopplungsteile eingekapselt ist. Auf diese Weise ist eine galvanische Verbindung zwischen den beiden Kopplungsteilen ausgeschlossen.

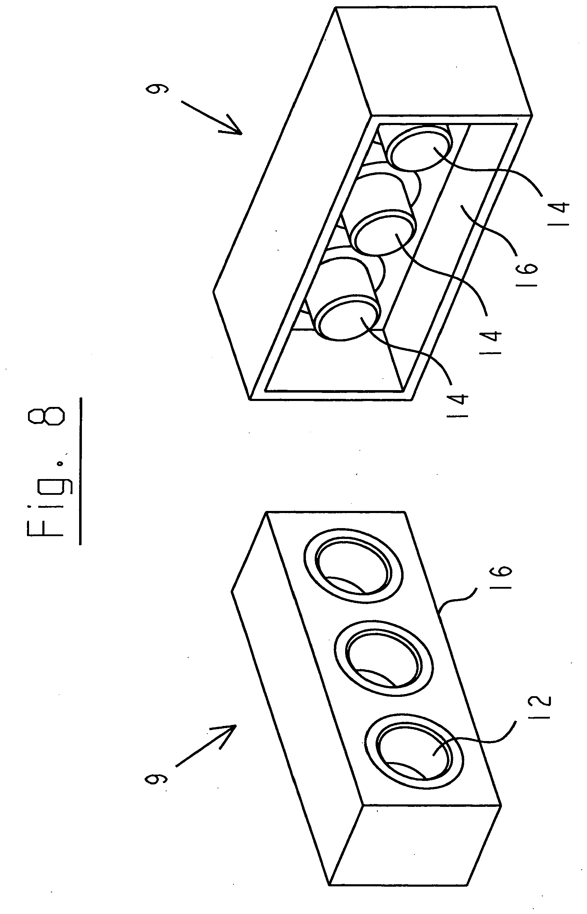

Wie in den Figuren 7 und 8 zu sehen ist, kann die Hochfrequenzkopplung, bestehend aus dem ersten und dem zweiten Hochfrequenz-Kopplungsteil 12, 14, mit geringem Aufwand in geeigneten Aussparungen des Trägers 16 der Elektrokupplung 9 angebracht werden. Insbesondere können sie an Steckplätzen angeordnet werden, die bisher ungenutzt waren oder von Kontakten belegt sind, die nicht mehr benötigt werden. Dies ermöglicht es, bereits im Betrieb befindliche Elektrokupplungen an die Anforderungen der hochfrequenten Signalübertragung aufzurüsten, ohne dass hierfür ein besonderer Aufwand erforderlich ist. Es ist lediglich erforderlich, im Träger 16 die Hochfrequenz-Kopplungsteile 12, 14 zu montieren und das entsprechende Kabel von der Elektrokupplung in den Triebwagen oder den entsprechenden Wagen zu führen. Dies ist jedoch problemlos möglich, da ohnehin eine Vielzahl von Kabeln zur Elektrokupplung führt, zu denen die Hochfrequenz-Kabel für die Hochfrequenzkopplung hinzugefügt werden können. In Abhängigkeit von den Anforderungen können in jeder Elektrokupplung so viele Hochfrequenzkopplungen eingebaut werden, wie dies notwendig ist.

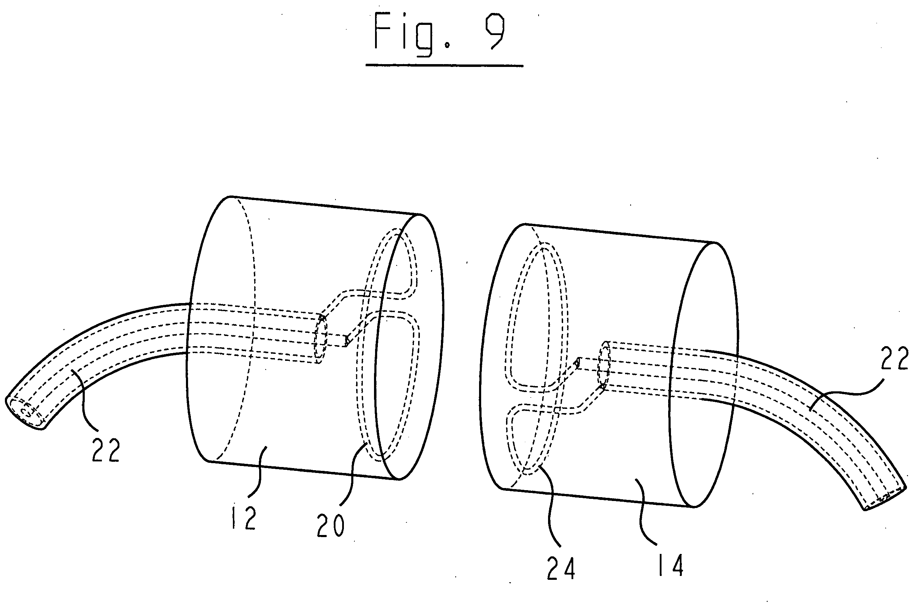

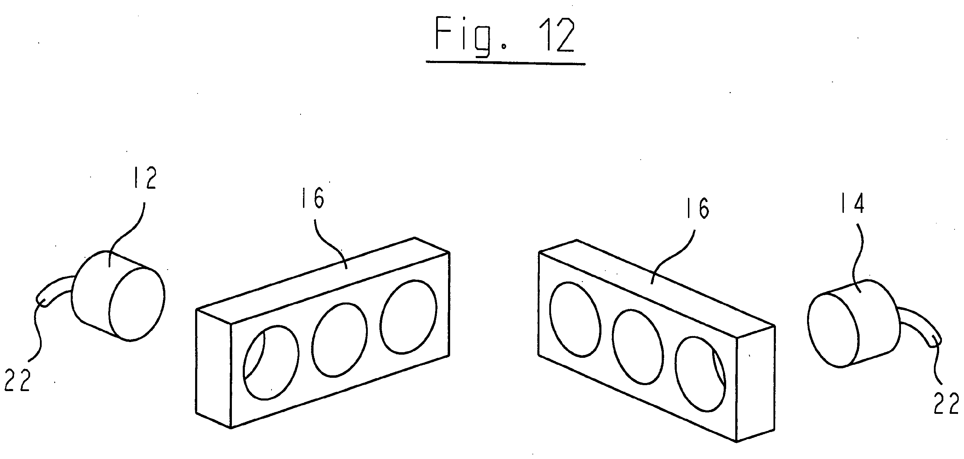

Anhand der Figuren 9 bis 13 wird nun eine zweite Ausführungsform der Hochfrequenzkopplung beschrieben. Für die von der ersten Ausführungsform bekannten Bauteile werden dieselben Bezugszeichen verwendet, und es wird insoweit auf die obigen Erläuterungen verwiesen.

Der Unterschied zwischen der ersten und der zweiten Ausführungsform besteht darin, dass bei der zweiten Ausführungsform die beiden Hochfrequenz-Kopplungsteile nicht ineinander eingreifen, sondern einander mit ihren Stirnseiten stumpf gegenüberliegen. Zu diesem Zweck ist jedes Hochfrequenz-Kopplungsteil 12, 14 nach Art eines Vorsprungs ausgeführt, hier als kreiszylindrischer Block, in den die Antenne 20 bzw. 24 eingebettet ist. Im Unterschied zur ersten Ausführungsform weisen die beiden Antennen 20, 24 hier denselben Durchmesser auf.

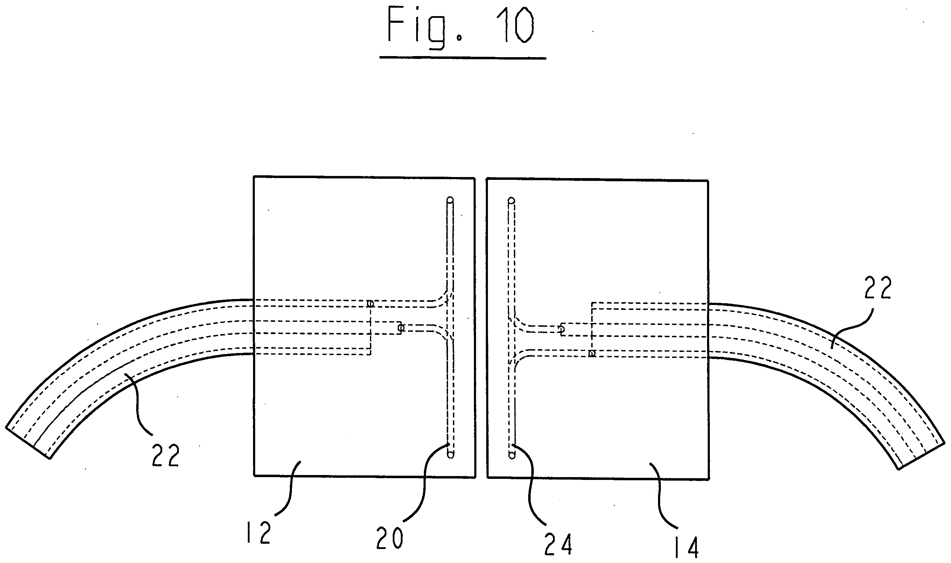

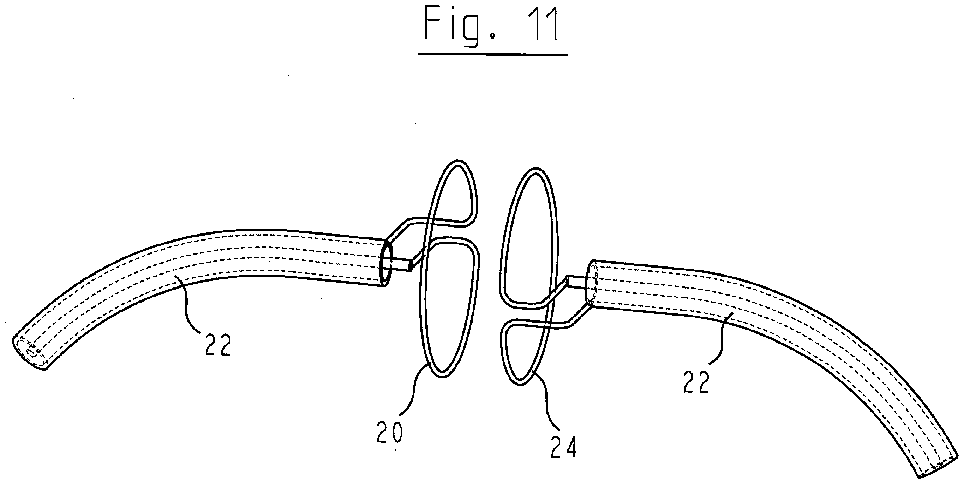

Wie in den Figuren 10 und 11 zu sehen ist, liegen sich die beiden Antennen 20, 24, wenn die beiden Hochfrequenz-Kopplungsteile 12, 14 einander in der Signalübertragungsstellung gegenüberliegen, parallel zueinander ausgerichtet gegenüber, wobei der Abstand senkrecht zu den Erstreckungsebenen ebenfalls nur wenige Millimeter oder Zentimeter beträgt. Auch hier erfolgt die Signalübertragung überwiegend durch die magnetische Kopplung zwischen den beiden Antennen 20, 24.

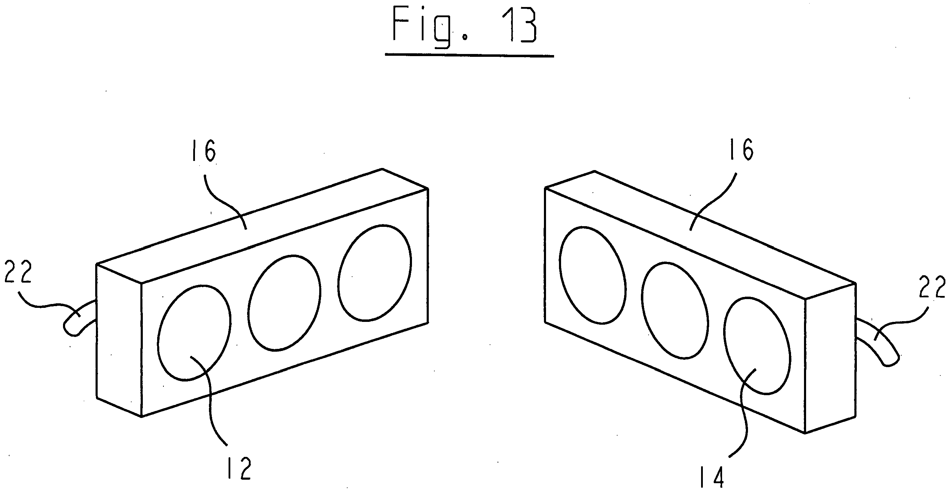

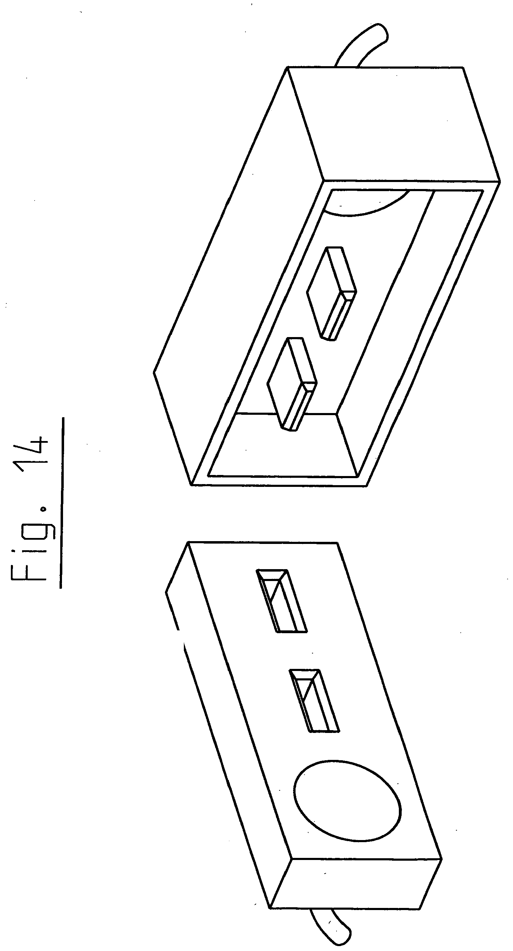

In Figur 13 ist zu sehen, dass mehrere Hochfrequenz-Kopplungsteile 12, 14 nebeneinander in jedem Träger 16 angeordnet sind. Es ist natürlich auch möglich, die Hochfrequenz-Kopplungsteile im Träger 16 neben anderen Kopplungsarten anzuordnen (siehe Figur 14), beispielweise elektrischen Steckverbindern.

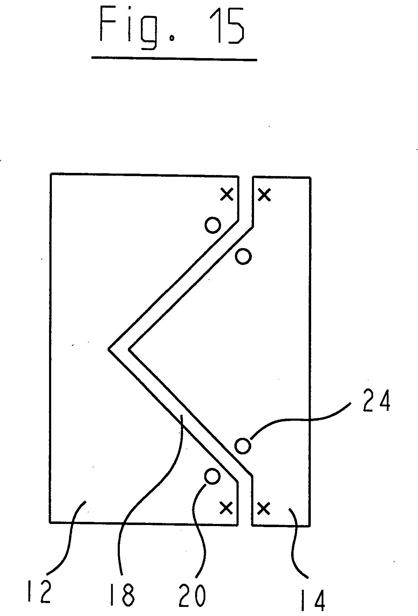

In Figur 15 ist eine weitere Ausführungsform gezeigt, die der ersten Ausführungsform dahingehend entspricht, dass das erste Hochfrequenz-Kopplungsteil 12 als konkave Aufnahme und das zweite Hochfrequenz-Kopplungsteil 14 als Vorsprung ausgeführt ist. Abweichend von der ersten Ausführungsform weist das erste Hochfrequenz-Kopplungsteil 12 bei der dritten Ausführungsform eine kegelförmige Aufnahme 18 auf, während der Vorsprung des zweiten Hochfrequenz-Kopplungsteils 14 als komplementärer Kegel ausgeführt ist. Auch bei dieser Ausführungsform liegen die beiden Antennen 20, 24, wenn die beiden Hochfrequenz-Kopplungsteile 12, 14 ineinandergesteckt sind, in derselben Ebene. Alternativ ist auch denkbar, die Antennen mit demselben Durchmesser auszuführen und so anzuordnen, dass sie sich ähnlich wie bei der zweiten Ausführungsform parallel zueinander gegenüberliegen. Eine entsprechende Position für die Antennen ist in Figur 15 mit den Kreuzen angedeutet.

## Patentansprüche

1. Elektrokupplung für Eisenbahnen, mit einem ersten und einem zweiten Kupplungsteil (9), die jeweils einen Träger (16) aufweisen, in dem mehrere Koppelteile angeordnet sind, mit denen eine elektrische, pneumatische und/oder hydraulische Kopplung von einem Kupplungsteil zum anderen Kupplungsteil hergestellt werden kann, wobei mindestens eine Hochfrequenzkopplung (10) vorgesehen ist, die durch eine gekapselte Antenne (20) in dem einen Kupplungsteil und eine gekapselte Antenne (24) in dem anderen Kupplungsteil gebildet ist, und wobei die Hochfrequenzkopplung (10) zwei miteinander zusammenwirkende Hochfrequenz-Kopplungsteile (12, 14) aufweist, die jeweils als Kunststoffkörper ausgeführt sind, der die Antenne (20, 24) vollständig umschließt, **dadurch gekennzeichnet, dass** die Hochfrequenz-Kopplungsteile (12, 14) spritzgegossen sind, sodass die Antenne (20, 24) vollständig im Material der Hochfrequenz-Kopplungsteile (12, 14) eingekapselt ist.

2. Elektrokupplung nach Anspruch 1, **dadurch gekennzeichnet, dass** die Antennen (20, 24) jeweils Magnetantennen sind.

3. Elektrokupplung nach Anspruch 1 oder Anspruch 2, **dadurch gekennzeichnet, dass** die Antennen (20, 24) jeweils Flachantennen sind.

4. Elektrokupplung nach einem der vorhergehenden Ansprüche, **dadurch gekennzeichnet, dass** die Antennen (20, 24) durch eine Antennenschleife gebildet sind.

5. Elektrokupplung nach einem der vorhergehenden Ansprüche, **dadurch gekennzeichnet, dass** eines der Hochfrequenz-Kopplungsteile einer Hochfrequenzkopplung als konkave Aufnahme (12) ausgeführt ist und das andere als komplementärer Vorsprung (14), der bei geschlossener Elektrokupplung so in der Aufnahme zu liegen kommt, dass die beiden Antennen (20, 24) in geringem Abstand zueinander zu liegen kommen.

6. Elektrokupplung nach Anspruch 5, **dadurch gekennzeichnet, dass** die Aufnahme als Buchse (12) ausgeführt ist und der Vorsprung als Stift (14), der bei geschlossener Elektrokupplung so in die Buchse (12) eingeschoben ist, dass die beiden Antennen (20, 24) mindestens näherungsweise in einer Ebene liegen.

7. Elektrokupplung nach Anspruch 6, **dadurch gekennzeichnet, dass** die Buchse (12) und/oder der Stift (14) mit Einführschrägen versehen ist.

8. Elektrokupplung nach Anspruch 5, **dadurch gekennzeichnet, dass** die Aufnahme (12) eine kegelförmige Aussparung (18) aufweist und der Vorsprung (14) als Kegel ausgeführt ist.

9. Elektrokupplung nach einem der vorhergehenden Ansprüche, **dadurch gekennzeichnet, dass** die beiden Hochfrequenz-Kopplungsteile (12, 14) einer Hochfrequenzkopplung (10) als stumpfer Vorsprung ausgeführt sind, die bei geschlossener Elektrokupplung einander unmittelbar gegenüberliegen, so dass die beiden Antennen (20, 24) einander mit geringem Abstand gegenüberliegen.

## Claims

1. An electric coupling for railways, comprising a first and a second coupling part (9) each including a support (16) in which a plurality of linking parts are arranged by means of which an electric, pneumatic and/or hydraulic link can be established from one coupling part to the other coupling part, at least one high-frequency link (10) being provided which is formed by an enclosed antenna (20) in one coupling part and by an enclosed antenna (24) in the other coupling part, and the high frequency link (10) including two cooperating high-frequency linking parts (12, 14) which are each configured as a plastic body which entirely encompasses the antenna (20, 24), **characterized in that** the high-frequency linking parts (12, 14) are injection-molded, so that the antenna (20, 24) is entirely encapsulated in the material of the high-frequency linking parts (12, 14).

2. The electric coupling according to claim 1, **characterized in that** the antennas (20, 24) each are magnetic antennas.

3. The electric coupling according to claim 1 or claim 2, **characterized in that** the antennas (20, 24) each are flat antennas.

4. The electric coupling according to any of the preceding claims, **characterized in that** the antennas (20, 24) are formed by an antenna loop.

5. The electric coupling according to any of the preceding claims, **characterized in that** one of the high-frequency linking parts of a high-frequency link is configured as a concave receptacle (12) and the other as a complementary projection (14) which comes to rest in the receptacle when the electric coupling is closed, such that the two antennas (20, 24) come to rest at a small distance from each other.

6. The electric coupling according to claim 5, **characterized in that** the receptacle is configured as a bushing (12) and the projection as a pin (14) which, when the electric coupling is closed, is inserted in the bushing (12) such that the two antennas (20, 24) are arranged at least approximately in one plane.

7. The electric coupling according to claim 6, **characterized in that** the bushing (12) and/or the pin (14) is provided with insertion bevels.

8. The electric coupling according to claim 5, **characterized in that** the receptacle (12) has a conical recess (18) and the projection (14) is configured as a cone.

9. The electric coupling according to any of the preceding claims, **characterized in that** the two high-frequency linking parts (12, 14) of a high-frequency link (10) are configured as obtuse projections which, when the electric coupling is closed, are directly opposite each other so that the two antennas (20, 24) are arranged opposite each other at a small distance.

## Revendications

1. Accouplement électrique pour chemins de fer, comportant une première et une deuxième pièce d'accouplement (9) qui présentent chacune un support (16) dans lequel sont agencées plusieurs pièces de couplage au moyen desquelles il est possible d'établir un couplage électrique, pneumatique et/ou hydraulique d'une pièce d'accouplement à l'autre pièce d'accouplement, au moins un couplage haute fréquence (10) étant prévu lequel est formé par une antenne encapsulée (20) dans l'une des pièces d'accouplement et une antenne encapsulée (24) dans l'autre pièce d'accouplement, et le couplage haute fréquence (10) présentant deux pièces de couplage haute fréquence (12, 14) qui coopèrent l'une avec l'autre et qui sont chacune réalisées sous forme de corps en matière plastique qui entoure entièrement l'antenne (20, 24), **caractérisé en ce que** les pièces de couplage haute fréquence (12, 14) sont moulées par injection de sorte que les antennes (20, 24) sont entièrement encapsulées dans la matière des pièces de couplage haute fréquence (12, 14).

2. Accouplement électrique selon la revendication 1, **caractérisé en ce que** les antennes (20, 24) sont respectivement des antennes magnétiques.

3. Accouplement électrique selon la revendication 1 ou la revendication 2, **caractérisé en ce que** les antennes (20, 24) sont respectivement des antennes planes.

4. Accouplement électrique selon l'une des revendications précédentes, **caractérisé en ce que** les antennes (20, 24) sont formées par une boucle d'antenne.

5. Accouplement électrique selon l'une des revendications précédentes, **caractérisé en ce que** l'une des pièces de couplage haute fréquence d'un couplage haute fréquence est réalisée sous forme de logement concave (12) et l'autre sous forme de saillie complémentaire (14) qui, lorsque l'accouplement électrique est fermé, vient se loger dans le logement de telle sorte que les deux antennes (20, 24) viennent se placer à faible distance l'une de l'autre.

6. Accouplement électrique selon la revendication 5, **caractérisé en ce que** le logement est réalisé sous forme de douille (12) et la saillie sous forme de pion (14) qui, lorsque l'accouplement électrique est fermé, est inséré dans la douille (12) de telle sorte que les deux antennes (20, 24) sont au moins approximativement agencées dans le même plan.

7. Accouplement électrique selon la revendication 6, **caractérisé en ce que** la douille (12) et/ou le pion (14) sont pourvus de chanfreins d'insertion.

8. Accouplement électrique selon la revendication 5, **caractérisé en ce que** le logement (12) présente un évidement conique (18) et **en ce que** la saillie (14) est réalisée sous forme de cône.

9. Accouplement électrique selon l'une des revendications précédentes, **caractérisé en ce que** les deux pièces de couplage haute fréquence (12, 14) d'un couplage haute fréquence (10) sont réalisées sous forme de saillies tronquées directement opposées l'une à l'autre lorsque l'accouplement électrique est fermé de sorte que les deux antennes (20, 24) sont opposées l'une à l'autre à faible distance.
